# EUROPÄISCHE PATENTSCHRIFT

(11) **EP 0 875 696 B1**
(45) Veröffentlichungstag und Bekanntmachung des Hinweises auf die Patenterteilung: **03.07.2002**
(21) Anmeldenummer: 98103925.8
(22) Anmeldetag: 05.03.1998
(51) Int. Cl.: F16H 47/02

(54) **Hydrostatisch-mechanisches Hybrid-Getriebe**
Hydrostatic-mechanical hybrid transmission
Transmission hybride hydrostatique-mécanique

(30) Priorität: 30.04.1997 DE 19718461
(43) Veröffentlichungstag der Anmeldung: 04.11.1998
(73) Patentinhaber: Neunkirchener Maschinen- und Achsenfabrik (NAF) GmbH & Co. KG, 91077 Neunkirchen a. B. (DE)
(72) Erfinder: Auer, Ernst, Dipl.-Ing., 81245 München (DE)
(74) Vertreter: Hofstetter, Alfons J., Dr.rer.nat.

(56) Entgegenhaltungen:
- EP-A- 0 754 883
- DE-A- 4 402 947
- DE-A- 19 524 188
- GB-A- 971 797

## Beschreibung

Die vorliegende Erfindung betrifft ein Hybridgetriebe für Landfahrzeuge aller Art. Besonders eignet sich das neue Getriebe für Fahrzeuge mit häufigen Fahrtrichtungswechseln, häufigen Anfahrvorgängen, großen Zugkräften bzw. langsamen Fahrgeschwindigkeiten und gleichzeitig hohen Endgeschwindigkeiten.

Fahrzeuge dieser genannten Art sind insbesondere Fahrzeuge aus den Bereichen Baumaschinen, wie z.B. Radlader, Muldenkipper (Dumper), Motorgrader oder Back-Hoe-Loader (Universalbagger). Aus dem Bereich Forstmaschinen eignet sich das Hybridgetriebe für Rückschlepper (Skidder), Forwarder, Harvester und Holztransporter in bergigem Gelände. Im Bereich Kommunalfahrzeuge läßt sich das Hybridgetriebe für Kehrmaschinen, Schneeräumfahrzeuge, Schneefräsen, Seitenrand- Mähgeräte und Instandhaltungsgeräte für Nebenstraßen einsetzen. Das Hybridgetriebe eignet sich darüber hinaus auch zur Anwendung in Stadtbussen mit quer zum Fahrzeug eingebautem Motor in einer liegenden Version in Verbindung mit einer Achse ohne Kegelrad-Differentialgetriebe.

Aus der GB 971 797 ist ein hydrostatisch-mechanisches Hybridgetriebe für Landfahrzeuge bekannt. Dabei kann das Landfahrzeug von einer Brennkraftmaschine, insbesondere einem Dieselmotor, entweder direkt oder hydraulisch angetrieben werden. Die Schaltung zwischen hydrostatischem und mechanischem Antrieb erfolgt dabei über eine Klaue, wobei für den mechanischen Antrieb die Klaue eine Verbindung zwischen einer Hilfswelle und einer Abtriebswelle schafft. Für den hydrostatischen.Antrieb wird die Hilfswelle entkoppelt. Nachteilig hierbei ist, daß bei den Schaltvorgängen die Drehzahl der Hilfswelle jeweils separat synchronisiert werden muß, wodurch der schaltvorgang erheblich erschwert wird.

Es ist daher Aufgabe der vorliegenden Erfindung, ein Hybridgetriebe der eingangs genannten Art bereitzustellen, welches möglichst einfach aufgebaut ist und eine automatische Synchronisation der Drehzahl bei der Schaltung zwischen mechanischem und hydrostatischem Antrieb gewährleistet.

Gelöst wird diese Aufgabe durch ein Hybridgetriebe mit den Merkmalen des Hauptanspruchs 1.

Durch eine Automatik kann die Brennkraftmaschine direkt auf eine Abtriebswelle oder auf einen Hydromotor gekoppelt werden, der seinerseits mit Druck von einer Axialkolbenpumpe versorgt wird, die ebenfalls von der Brennkraftmaschine angetrieben wird. Weitere Merkmale ergeben sich aus der nachfolgenden Beschreibung und den Ansprüchen.

Von der Antriebswelle des Getriebes erfolgt über ein Zwischenrad der Antrieb der hydrostatischen Pumpe mit veränderlichem Fördervolumen. Durch Abstimmung dieser Übersetzung kann eine aus Geräusch- und Emissionsgründen niedriggehaltene Drehzahl des Verbrennungsmotors auf höhere Drehzahl gebracht werden und ermöglicht dadurch die Anwendung von kleineren, leichteren und preiswerteren Pumpen. Über ein weiteres Zwischenrad, beispielsweise zur Überbrückung des für Allradantrieb notwendigen Achsenabstandes, wird ein Getrieberad angetrieben, das auf der Abtriebswelle des Getriebes gelagert ist.

Weiterhin ist ein Hydromotor am Getriebe angeordnet und seinerseits mit einem zweiten, ähnlich getragenen Getrieberad auf der Abtriebs welle verbunden. Ein Zwischenrad kann als Blockrad zur Erzeugung einer größeren Übersetzung zwischen Hydromotorwelle und Abtriebswelle ausgeführt sein.

Über einen Durchtrieb der Antriebswelle ist es möglich, Hilfsantriebe mit voller Motorleistung abzunehmen. Aus räumlichen Gründen können dabei Hydropumpe und Hydromotor zugleich auf der Antriebs- oder Abtriebsseite des Getriebes angeordnet werden oder auch wechselseitig.

Weitere Einzelheiten, Merkmale und Vorteile der Erfindung ergeben sich aus der nachfolgenden Beschreibung eines in der Zeichnung schematisch dargestellten Ausführungsbeispiels.

Eine Antriebswelle 20 wird bei 22 von einer nicht dargestellten Brennkraftmaschine direkt oder über ein Zwischengetriebe angetrieben. Drehfest mit der Antriebswelle 20 ist ein Zahnrad 24 verbunden, welches einerseits mit einem Ritzel 26 auf einer Welle 28 kämmt und andererseits mit einem Zwischenrad 30 auf einer Vorgelegewelle 32. Im vorliegenden Beispiel ist mit der Antriebswelle 20 noch ein Anschluß 33 für eine angedeutete Zapfwelle 35 vorgesehen. Dies würde bei Mehrzweckfahrzeugen oder bei Arbeitsmaschinen zum Anflanschen eines weiteren Aggregates dienen.

Die Welle 28 treibt eine erste Axialkolbenpumpe 34 zur Erzeugung eines hydrostatischen Druckes und eine zweite Hydraulikpumpe 36 an, die zum Bewegen eines Steuerkolbens 40 in einem Zylinder 42 dient.

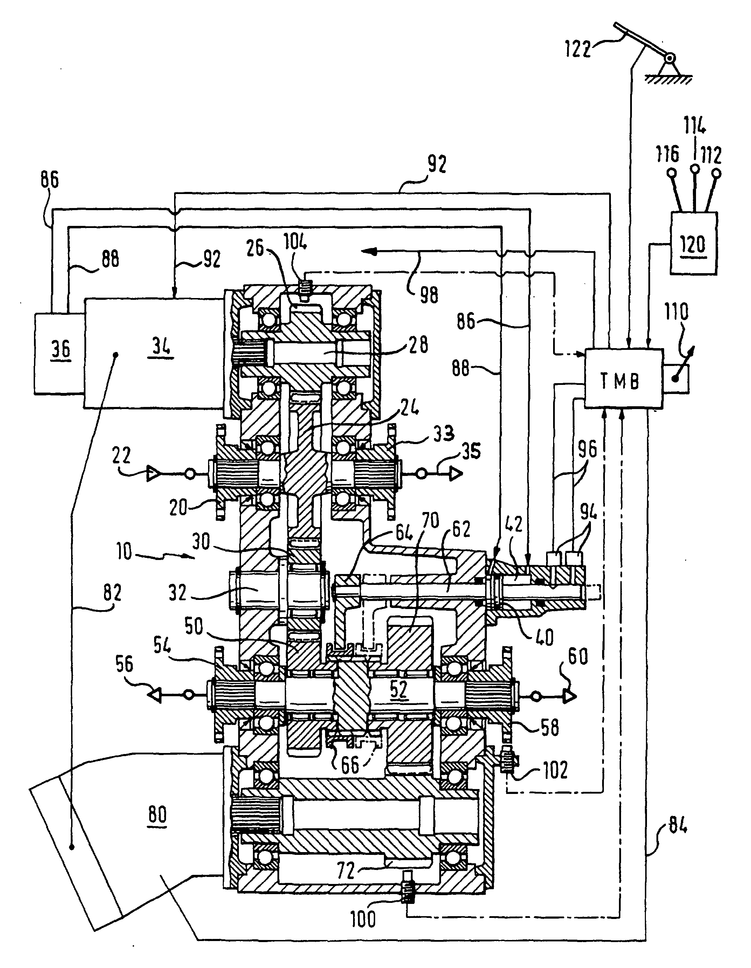

Das Zwischenrad 30 ist in der Darstellung der Figur 1 an ein Getrieberad 50 gekuppelt, welches auf einer Abtriebswelle 52 sitzt, die mit den Antriebsrädern des Fahrzeuges verbunden ist. So kann die Abtriebswelle 52 in der Abbildung links einen Flansch 54 haben, der wie mit Pfeil 56 angedeutet das Fahrmoment zur Vorderachse leitet, und kann rechts einen Flansch 58 aufweisen, der gemäß Pfeil 60 mit der Hinterachse verbunden ist.

In der eingezeichneten Stellung befindet sich der Steuerkolben 40 im Zylinder 42 in seiner linken Endposition. Dadurch wird eine Kolbenstange 62 mit einem Kupplungsfinger 64 und einer Klaue 66 ebenfalls in die linke Position bewegt. In dieser Position sind der Kupplungsfinger 64 und die Klaue 66 in die mit ausgezeichneten Linien dargestellte Position verschoben, in der das Getrieberad 50 mit der Abtriebswelle 52 gekoppelt ist und dadurch das Antriebsmoment nahezu im Verhältnis 1:1 oder mit einer geringen Untersetzung an die Antriebsräder gelangt. In dieser Position der Klaue 66 ist ein weiteres Getrieberad 70 von der Abtriebswelle 52 ausgekoppelt. Das Getrieberad 70 befindet sich in dieser Position in einer neutralen Stellung, d.h. der Antrieb vom Hydromotor 80 gelangt nicht an die Abtriebswelle 52. Erst, wenn der Steuerkolben 40 in Zylinder 42 in die rechte Position bewegt worden ist und der Kupplungsfinger 64 die Klaue 66 in die gestrichelt eingezeichnete Position gebracht hat, wird das Getrieberad 50 ausgekoppelt und das Getrieberad 70 mit der Abtriebswelle 52 gekoppelt, wobei das Getrieberad 70 mit einem Ritzel 72 einer Welle des Hydromotors 80 kämmt. Die Abtriebswelle 52 wird dadurch vom Hydromotor 80 angetrieben.

Der Hydromotor 80 wird über eine hydrostatische Leitung 82 mit Druck von der ersten Pumpe 34 versorgt. Die Pumpe 34 ist eine Axialkolbenpumpe, deren Ring aus Zylinder und Kolben in der Neigung gegenüber der Welle 28 zumindest in ausgewählte Stellungen für unterschiedliche Druckerzeugungen und/oder unterschiedliche Druckrichtungen in der Leitung 82 variiert werden kann. Die entsprechende Einstellung erfolgt über eine Steuerleitung 92, was nachstehend noch näher erläutert wird.

Diese bekannte Verstellbarkeit von Axialkolbenmaschinen kann aber auch dem Hydromotor 80 zugeordnet werden. Dafür ist eine Steuerleitung 84 vorgesehen. Zum Anfahren wird der hydrostatische Motor 80 benutzt. Durch entsprechende Einstellung des Kolbens im Zylinder 42, nämlich durch Beaufschlagen des Kolbens mit Druck über eine Leitung 88 aus der zweiten Hydraulikpumpe 36 befindet sich die Klaue 66 in der oben beschriebenen rechten Stellung und das Getrieberad 70 ist mit der Abtriebswelle 52 gekoppelt, während das Getrieberad 50 in dieser Stellung ausgekoppelt ist. Erst, wenn die nachstehend beschriebene Umschaltung auf mechanischen Betrieb erfolgt, wird der Kolben 40 über eine Druckleitung 86 beaufschlagt.

Durch Ausschwenken der verstellbaren Hydropumpe 34 erfolgt ein verschleißfreies Einkuppeln des Antriebes und das Fahrzeug beschleunigt bis zu einer Geschwindigkeit, die durch die Auslegung des hydrostatischen Antriebes vorgegeben ist. Durch die Ausschwenkrichtung der Pumpe 34 ist auch die Fahrtrichtung einstellbar.

Zum Umschalten vom hydrostatischen Antrieb zum rein mechanischen wird über eine Transmission Management Box (TMB) der hydrostatische Antrieb durch entsprechende Pumpenregulierung drehmomentfrei eingestellt und gleichzeitig der Dieselmotor auf eine solche Drehzahl gebracht, daß die Drehgeschwindigkeit des mechanischen Getrieberades 50 mit der durch die augenblickliche Fahrgeschwindigkeit gegebenen Drehzahl der Antriebswelle übereinstimmt. Die Messung dieser Drehzahlen geschieht über entsprechende Sensoren 100, 102, 104, die ihr Signal an die Box TMB geben. Die Drehzahl des Hydromotors 80 wird vom Sensor 100, die Drehzahl der Abtriebswelle 52 vom Sensor 102 und die untersetzte Drehzahl der Brennkraftmaschine vom Sensor 104 ermittelt und alle Daten werden über die strichpunktierten Leitungen an die Box TMB geliefert. Die Position des Kolbens 40 und der Kolbenstange 62 wird von Sensoren 94 abgegriffen und über Leitungen 96 an die Box TMB gemeldet. Während des Automatikbetriebes steuert die Box TMB automatisch die Regelung der Einspritzpumpe der Brennkraftmaschine über eine Leitung 98.

Die Schaltpunktstellung, wann gewünschterweise automatisch vom Anfahrbetrieb mittels Hydromotor 80 auf Direktantrieb umzuschalten ist, kann vom Hebel 110 vorgewählt werden. Die Umstellung von "automatisch (112)" auf "hydrostatisch (114)" mit der Wahl "vorwärts"/"rückwärts" oder auf "mechanisch (116)" erfolgt am Schaltkasten 120. Die Fahrgeschwindigkeit wird in jedem Fall in üblicher Weise über das Pedal 122 geregelt.

Der Schaltzeitpunkt zwischen Hydraulik - und Mechanikbetrieb wird zweckmäßigerweise auf die Drehzahl gelegt, bei welcher der Verbrennungsmotor sein größtes Drehmoment hat. Er kann aber auch auf jede beliebige Drehzahl oberhalb der Leerlaufdrehzahl gelegt werden, wenn das Drehmoment des Verbrennungsmotors ausreicht, um das Fahrzeug weiter zu beschleunigen.

Durch diese Maßnahme wird erreicht, daß im unteren Fahrgeschwindigkeitsbereich alle Vorteile des hydrostatischen Fahrantriebes wie
- stufenlose Regelung der Fahrgeschwindigkeit unabhängig von der Drehzahl des Verbrennungsmotors,
- verschleißfreies Anfahren und verschleißfreier Fahrtrichtungswechsel,
- günstiger Wirkungsgrad im Vergleich zu hydrodynamischen Drehmomentwandlern
ausgenützt werden können.

Die bekannten schlechteren Wirkungsgrade des hydrostatischen Fahrantriebs bei größeren Regelbereichen der Geschwindigkeit bedingt durch kleine Schwenkwinkel der Hydromotoren und große Fördervolumina der Pumpe und entsprechende Leistungsverluste werden durch den mechanischen Antrieb vermieden. Das Umschalten vom hydrostatischen in den mechanischen Antrieb kann sowohl vom Fahrer direkt beeinflußt werden als auch durch eine Automatik in der Box TMB fahrerunabhängig geregelt werden.

Wird zwischen dem Hybridgetriebe und dem Hydromotor noch ein Lastschaltteil (siehe DE 44 14 127, C 1) angeordnet, so ergibt sich ein Wandlungsbereich z.B. für einen Radlader, der mit kleinen hydrostatischen Einheiten Fahrgeschwindigkeiten von 0 - 25 km/h mit den hohen Schubkräften zum Losbrechen des Materials ermöglicht und gleichzeitig ohne wesentliche Kosten eine Fahrgeschwindigkeit auf öffentlichen Straßen bis zu 50 oder 62 km/h ermöglicht.

Als Nebeneffekt kann bei Fahrzeugen, die vom Gesetzgeber mit einer Dauerbremse (Retarder) verlangt werden, die hydrostatische Pumpe bei den mechanisch gefahrenen Geschwindigkeiten durch Aussteuern gegen ein Überdruckventil als verschleißfreie Dauerbremse eingesetzt werden. Die entstehende Wärme wird im sowieso vorhandenen Kühler an die Umgebung abgeführt.

Anhand eines konkreten Beispieles eines Holztransporters soll dies aufgezeigt werden.

| | |
|---|---|
| Eigengewicht | 13 t |
| Nutzlast | 12 t |
| Gesamtgewicht | 25 t |
| Reifen | 700 - 22,5 |
| Reifenradius | 0,53 m |
| Zugkraft | mindestens 15 t |
| Rollwiderstand (feste Straße) | 0,03 |
| mechanischer Wirkungsgrad | 85 % |
| Luftwiderstandsbeiwert cw | 1,0 |
| Querschnittsfläche | 9,1 qm |
| Achsübersetzung | 13 |
| Dieselmotor | 128 KW (175 PS) bei 2.500 U/min |
| max. Drehmoment | 650 Nm bei 1.200 U/min |
| Getriebeübersetzung für mechanischen Antrieb | 0,78 |
| Getriebeübersetzung für hydrostatischen Antrieb | |
| 1. Gang | 7,96 |
| 2. Gang | 2,47 |
| Hydropumpe, q max. | 71 cm³/U |
| Übersetzung zwischen Diesel und Pumpe | 0,75 |
| maximale Pumpendrehzahl | 3.300 U/min |
| maximale Pumpenfördermenge | 235 L/min |
| Hydromotor, q max. | 160 cm³/U |
| q min. | 55 cm³/U |

Mit diesen Hauptdaten wird erreicht:

| | |
|---|---|
| maximale Hydromotordrehzahl | 4.000 U/min |
| maximales Hydromotormoment | 1.020 Nm bei q max. und 420 bar |
| maximale Fahrgeschwindigkeit | |
| im 1. hydrostatischen Gang | 7,85 km/h |
| im 2. hydrostatischen Gang maximale Zugkraft | 25,3 km/h |
| im 1. hydrostatischen Gang | 152.350 N |
| im 2. hydrostatischen Gang | 47.275 N |
| max. Fahrgeschwindigkeit im mech. Gang | 50,2 km/h |
| max. Zugkraft bei max. Fahrgeschwindigkeit | 8.000 Nm |
| max. befahrbare Steigung bei max. Drehmoment des Dieselmotors | ca. 4,7 % bei 25 km/h |

Zum Schalten bei optimaler Ausnutzung der Beschleunigung wird der hydrostatische Antrieb voll ausgefahren im 2. hydrostatischen Gang d.h., eine Hydromotordrehzahl von 4.000 U/min, was einer Drehzahl der Getriebsabtriebswelle von 1.620 U/min entspricht. Die Dieselmotordrehzahl wird solange reduziert bzw. erhöht, bis sie zusammen mit der mechanischen Übersetzung ebenfalls diese Drehzahl des Losrades auf der Antriebswelle erzeugt. Dann erfolgt das Umschalten von hydrostatischen auf mechanischen Antrieb.

## Patentansprüche

1. Hybridgetriebe für Landfahrzeuge und selbstfahrende Arbeitsmaschinen mit einer Brennkraftmaschine, insbesondere einem Dieselmotor, als Antriebsquelle und einem von einer Axialkolbenpumpe angetriebenen Hydromotor, wobei
daß das Hybridgetriebe (10) eineAntriebswelle (20) für das von der entweder direkt angeflanschten oder über eine Welle verbundenen Brennkraftmaschine (22) gelieferte Antriebsdrehmoment aufweist, welches von einem fest auf der Antriebswelle (20) sitzenden Getrieberad (24) einerseits an einen festgekoppelten Antrieb der Axialkolbenpumpe (34) und andererseits an ein ein- und auf einer Abtriebswelle (52) angeordnetes Getrieberad (50) verteilt wird, wobei beim mechanischen Betrieb die Brennkraftmaschine (22) über das Getrieberad (50) mit der Abtriebswelle (52) koppelt, während die Axialkolbenpumpe (34) ohne Druck zu erzeugen in ihrer neutralen Stellung freiläuft und wobei beim hydraulischen Betrieb das Getrieberad (50) ausgekuppelt ist und ein auf der Abtriebswelle (52) angeordnetes und von dem ersten Getrieberad (50) beabstandetes zweites Getrieberad (70) in Eingriff mit einem Ritzel (72) einer Welle des Hydromotors (80) eingekoppelt und angetrieben ist, wobei die Ein- und Auskupplung der auf der Abtriebswelle (52) angeordneten Getrieberäder (50, 70) mittels einer Klaue (66), die über einen auf einer Kolbenstange (62) angeordneten Kupplungsfinger (64) bewegbar ist, erfolgt, **dadurch gekennzeichnet, daß** die Kolbenstange (62) mit einem Hydraulikkolben (40) in einem Zylinder (42) verschiebbar ist, daß der Hydraulikkolben (40) über Leitungen (86, 88) von einer zweiten Hydraulikpumpe (36) druckbeaufschlagbar ist daß die Stellung des Hydraulikkolbens (40) mittels Sensoren (94, 96) abtastbar ist, und
daß die Synchronisation des Umschaltvorganges von hydraulischen auf mechanischen Betrieb nach Abtasten der beteiligten Drehzahlen über Sensoren (100, 102, 104) automatisch über eine einstellbare (110) Schaltbox (TMB) erfolgt.

2. Hybridgetriebe nach Anspruch 1,
**dadurch gekennzeichnet,**
**daß** zwischen Getrieberad (24) auf der Antriebswelle (20) und dem Antrieb der Axialkolbenpumpe (34) eine Übersetzung erfolgt.

3. Hybridgetriebe nach Anspruch 1,
**dadurch gekennzeichnet,**
**daß** die Abtriebswelle (52) je einen Flansch (54, 58) zum Weiterleiten des Drehmomentes an eine Vorderachse und an eine Hinterachse des Landfahrzeugs aufweist.

## Claims

1. A hybrid transmission for land craft and self-propelled machines including an internal combustion engine, in particular a diesel engine, as a power source, and a hydraulic engine driven by an axial piston pump wherein said hybrid transmission (10) comprises a drive shaft (20) for the driving torque supplied by the internal combustion engine (22) which is either flange-connected directly or connected via a shaft, which torque is distributed, on the one hand, to a tightly coupled drive of said axial piston pump (34) by a gearwheel (24) firmly mounted on said drive shaft (20), and, on the other hand, to a gearwheel (50) which is mounted on a driven shaft (52) and which can be engaged and disengaged, wherein, during mechanical operation, said internal combustion engine (22) will engage with said driven shaft (52) via said gearwheel (50), while the axial piston pump (34) will idle in its neutral position, without generating any pressure, and wherein, during hydraulic operation, said gearwheel (50) will be disengaged, and a second gearwheel (70) mounted on said driven shaft (52) and spaced from said first gearwheel (50) will be engaged to mesh with a pinion (72) of a shaft of said hydraulic engine (80) and will be driven thereby, with the gearwheels (50, 70) mounted on said driven shaft (52) being engaged and disengaged by means of a claw (66) which can be moved by means of a coupling finger (64) mounted on a piston rod (62), **characterized in that** said piston rod (62) can be displaced together with a hydraulic piston (40) within a cylinder (42), that said hydraulic piston (40) can be supplied with pressure from a second hydraulic pump (36) via lines (86, 88), that the position of the hydraulic piston (40) can be detected by means of sensors (94, 96), and that switch-over from hydraulic to mechanical operation will be synchronized automatically by means of an adjustable (110) TMB, after the rotation speeds involved have been detected by sensors (100, 102, 104).

2. The hybrid transmission of claim 1
**characterized in that** a gearing process occurs between gearwheel (24) on the drive shaft (20) and the drive of the axial piston pump (34).

3. The hybrid transmission of claim 1
**characterized in that** the driven shaft (52) includes a flange (54, 58) each for transmitting the torque to a front axle and a rear axle of the land craft.

## Revendications

1. Transmission hybride pour véhicules routiers et machines de travail automotrices ayant un moteur à combustion interne, en particulier un moteur Diesel, en tant que source motrice, et un moteur hydraulique commandé par une pompe à pistons axiaux, ladite transmission hybride (10) comprenant un arbre de transmission (20) pour le couple moteur délivré par le moteur à combustion interne (22) flasqué soit directement soit au moyen d'un arbre,
ledit couple moteur étant distribué d'une part par une roue de transmission (24) logée de manière fixe sur l'arbre de transmission (20) à une commande de la pompe à pistons axiaux (34) accouplée de manière fixe, et d'autre part à une roue de transmission (50) capable d'être accouplée et découplée et arrangée sur un arbre de sortie (52),
ledit moteur à combustion interne, lors de l'opération mécanique, s'accouplant à l'arbre de sortie (52) au moyen de la roue de transmission (50), tandis que la pompe à pistons axiaux (34) est en roue libre dans sa position neutre sans générer de la pression, et la roue de transmission (50) étant découplée lors de l'opération hydraulique, et une deuxième roue de transmission (70) arrangée sur l'arbre de sortie (52) et à une distance de la première roue de transmission (50) en prise avec un pignon (72) d'un arbre du moteur hydraulique (80) étant accouplée et commandée,
l'accouplement et le découplage des roues de transmission (50, 70) arrangées sur l'arbre de sortie (52) s'effectuant au moyen d'une griffe (66) mobile à l'aide d'un doigt d'accouplement (64),
**caractérisée en ce que** la tige de piston (62) peut être déplacée dans un cylindre (42) avec un piston hydraulique (40),
que le piston hydraulique (40) peut être sollicité par pression venant d'une seconde pompe hydraulique (36) via des lignes (86, 88),
que la position du piston hydraulique peut être détectée au moyen de palpeurs (94, 96), et
que la synchronisation de l'opération de changement de l'opération hydraulique à l'opération mécanique s'effectue automatiquement au moyen d'un tableau de commutation (TMB) réglable (110) après la détection des vitesses respectives à l'aide des palpeurs (100, 102, 104).

2. Transmission hybride selon la revendication 1,
**caractérisée en ce que**
entre la roue de transmission (24) sur l'arbre de transmission (20) et la commande de la pompe à pistons axiaux (34) s'ensuit une transmission.

3. Transmission hybride selon la revendication 1,
**caractérisée en ce que**
l'arbre de sortie (52) comprend une flasque (54, 58) pour transmettre le couple moteur à un essieu avant et à un essieu arrière d'un véhicule routier.
